# FASCICULE DE BREVET EUROPEEN

(11) **EP 2 126 735 B1**
(45) Date de publication et mention de la délivrance du brevet: **10.04.2019**
(21) Numéro de dépôt: 08717709.3
(22) Date de dépôt: 12.03.2008
(51) Int. Cl.: G06F 17/28

(54) **PROCÉDÉ DE TRADUCTION AUTOMATIQUE**
AUTOMATISCHES ÜBERSETZUNGSVERFAHREN
AUTOMATIC TRANSLATION METHOD

(30) Priorité: 20.03.2007 FR 0702007
(43) Date de publication de la demande: 02.12.2009
(73) Titulaire: Commissariat à l'Énergie Atomique et aux Énergies Alternatives, 75015 Paris (FR)
(72) Inventeur: FLUHR, Christian, F-91150 Etampes (FR); GREFENSTETTE, Grégory, F-75008 Paris (FR); SEMMAR, Nasredine, F-91190 Villiers Le Bacle (FR)
(74) Mandataire: Lucas, Laurent Jacques
(86) Numéro de dépôt international: PCT/EP2008/052964
(87) Numéro de publication internationale: WO 2008/113733

(56) Documents cités:
- US-B1- 7 146 358
- NASREDINE SEMMAR & CHRISTIAN FLUHR: "Using cross-language information retrieval for sentence alignment" THE CHALLENGE OF ARABIC FOR NLP/MT. INTERNATIONAL CONFERENCE AT THE BRITISH COMPUTER SOCIETY, [Online] 1995, page 23.10.2006, XP002455816 London, UK Extrait de l'Internet: URL:http://www.mt-archive.info/BCS-2006-Se mmar.pdf> [extrait le 2007-10-19]
- EIJI KOMATSU, CUI JIN AND HIROSHI YASUHARA: "A mono-lingual corpus-based machine translation of the interlingua" TMI-93. THE FIFTH INTERNATIONAL CONFERENCE ON THEORETICAL AND METHODOLOGICAL ISSUES IN MACHINE TRANSLATION, [Online] 14 juillet 1993 (1993-07-14), - 16 juillet 1993 (1993-07-16) XP002455817 Kyoto, Japan Extrait de l'Internet: URL:http://www.mt-archive.info/TMI-1993-Ko matsu.pdf> [extrait le 2007-10-19]
- G. GREFENSTETTE: "World wide web as a resource for example-based machine translation tasks" TRANSLATING AND THE COMPUTER. PROCEEDINGS OF THE INTERNATIONAL CONFERENCE ON TRANSLATING AND THE COMPUTER, TRANSLATING AND THE COMPUTER. PROCEEDINGS OF THE ASLIB CONFERENCE, XX, XX, 10 novembre 1999 (1999-11-10), pages 1-12, XP002275655

## Description

La présente invention concerne un procédé de traduction automatique. De façon générale, elle s'applique pour des traductions même sans textes bilingues préalablement établis. Elle s'applique notamment pour traduire des textes mettant en jeu une langue rare.

Les systèmes de traduction automatique peuvent être actuellement répartis selon au moins deux modes.

Dans un premier mode les systèmes de traduction sont basés sur une analyse morphosyntaxique des phrases à traduire puis sur un transfert et une génération des phrases traduites. La seule sémantique utilisée porte en général sur des restrictions d'usage intégrées aux dictionnaires bilingues mémorisés dans des bases de données. Pour obtenir une traduction compréhensible dans un domaine, il est souhaitable d'investir du temps pour ajouter le vocabulaire de spécialité et ajouter les restrictions de sens dans les dictionnaires. La qualité des traductions permet une certaine compréhension globale des textes mais ne constitue pas une traduction utilisable sans une lourde révision. De plus, ces systèmes prennent peu en compte les habitudes de langage qui font qu'une phrase peut se dire alors qu'une autre correcte du point de vue syntaxique et sémantique ne se dit pas.

Dans un deuxième mode les systèmes font appel à des mémoires de traduction qui utilisent, pour la traduction, la ressemblance des phrases à traduire avec une phrase déjà traduite. Pour cela, il faut disposer de nombreux textes traduits et procéder à l'alignement des phrases, traductions l'une de l'autre, à l'aide d'un algorithme d'alignement. Des techniques de recherche d'information monolingue, en langage source, sont alors utilisées pour chercher la phrase la plus proche d'une phrase à traduire dans la même langue. La traduction est fournie grâce à l'alignement préalable des phrases des textes déjà traduits. Ces systèmes sont notamment utilisés pour la traduction des documents techniques de produits dans la mesure où d'une version à l'autre les textes ne varient pas beaucoup.

Par ailleurs, en se basant sur des technologies utilisées pour la reconnaissance de la parole, une approche de la traduction automatique a été développée en s'inspirant des mémoires de traduction. Il s'agit alors d'exploiter par des méthodes statistiques portant sur des successions d'un nombre n de mots, en général trois, les textes traduits et en calculant la probabilité de leurs traductions trouvées dans l'autre élément du texte bilingue. Ces techniques se sont avérées meilleures que les systèmes de traduction automatique classiques. Cependant, si dans le domaine de l'actualité par exemple on dispose d'assez de corpus y compris bilingue, en particulier entre l'anglais et les langues économiquement les plus importantes, dans tous les autres domaines ces techniques ne disposent pas de suffisamment de données pour être opérationnelles. De plus, elles n'exploitent pas la totalité de la connaissance qui est contenue dans les rares textes bilingues existant par l'usage de N grams ou successions de N mots pris en compte pour créer des modèles de langage. On exige alors que la succession de 2, 3 ou N mots soit identique à ce qui est à traduire, ce qui est généralement trop restrictif. En effet, la contrainte de succession stricte est très restrictive. Par exemple traduire « Il mange souvent du chocolat » du français vers l'anglais par « he often eats chocolaté » ne permet pas de traduire « Il mange du chocolat ». De même, les mots doivent être strictement identiques. Ainsi, « Le gâteau est bon » qui se traduit par « The cake is good » ne permet pas de traduire « Les gâteaux sont bons ». Cela est notamment dû au fait qu'il n'existe en général aucun traitement linguistique dans de tels systèmes car ce sont des systèmes purement statistiques.

Par ailleurs, un autre inconvénient important provient notamment du volume important de données qui servent à apprendre la traduction. En effet, la quantité de textes bilingues disponibles est infiniment plus petite que les textes disponibles dans la seule langue cible, c'est-à-dire dans la langue à traduire. Cela est d'autant plus significatif si on veut par exemple traduire d'une langue rare vers une langue courante comme le français ou l'anglais notamment, cas où les textes bilingues sont rares ou même inexistants sur support informatique.

Le document XP002455816 (NASREDINE SEMMAR & CHRISTIAN FLUHR : « Using cross-language information retrival for sentence alignment » THE CHALLENGE OF ARABIC FOR NLP/MT. INTERNATIONAL CONFERENCE AT THE BRITISH COMPUTER SOCIETY, 23.10.2006) décrit une méthode d'alignement de phrases qui nécessite deux corpus de textes dont l'un est la traduction de l'autre. Ces deux corpus parallèles sont indexés sous forme de deux bases pour être exploitées par la technique décrite dans le document. Dans le document, l'alignement des phrases consiste à prendre en entrée un texte et sa traduction, et en sortie à mettre en correspondance chaque phrase du texte source avec la phrase déjà traduite dans le texte cible. L'alignement de phrases est un traitement préalable à certaines technologies de traduction automatique, telles que celles utilisées par les systèmes de traduction statistique.

Un but de l'invention est notamment de pallier les inconvénients précités. A cet effet, l'invention a pour objet un procédé de traduction automatique d'une phrase dans une langue source, phrase source, vers une phrase dans une langue cible, phrase cible, le procédé comportant :
- une étape d'extraction de l'ensemble de parties de phrases de la langue cible dans une base de données textuelle correspondant à une traduction totale ou partielle de la phrase source à traduire ;
- une étape de détermination de tous les assemblages de ces parties de phrases cibles formant un recouvrement de la phrase source ;
- une étape de choix des meilleurs assemblages selon un critère de recouvrement maximal entre les parties de phrases cibles assemblées dans l'étape précédente et selon un critère de minimisation du nombre d'éléments assemblés;
- une étape de détermination de la phrase cible par le choix du meilleur assemblage en fonction de critères de cohérence.

Le procédé comporte par exemple une étape préalable de création de la base de données textuelle de la langue cible dans laquelle sont extraites les parties de phrases.

Dans un exemple particulier, la base de données peut être créée selon les phases suivantes :
- une première phase effectuant la récupération des textes dans la langue cible ;
- une deuxième phase réalisant un découpage des textes récupérés en phrases et réalisant une analyse syntaxique ;
- une troisième phase regroupant les textes des phrases accompagnés d'une représentation de leur analyse syntaxique.

Dans l'étape de création de la base de données dans la langue cible, l'analyse syntaxique est par exemple réalisée sous forme de relations de dépendance, le résultat de l'analyse étant codé par des triplets (gouverneur, dépendant, relation) associés à une information de localisation dans les différentes phrases de la base où ils apparaissent, le gouverneur étant un mot principal et son dépendant étant un mot qui le qualifie en fonction de la relation.

La première étape du procédé comporte :
- une phase d'analyse syntaxique de la phrase source ;
- une phase de recherche interlingue entre la langue source et la langue cible ;
les parties de phrases extraites étant les meilleurs recouvrements entre le résultat de l'analyse syntaxique de la phrase source dont les éléments ont été remplacés par des traductions possibles et les résultats de l'analyse syntaxique des phrases cibles stockées dans la base de données.

La deuxième étape du procédé comporte par exemple une phase de détermination des assemblages formant un recouvrement de la phrase source à partir des assemblages de plus grande intersection, les recouvrements sélectionnés étant les parties de phrases ayant les plus grandes intersections de structure ayant une longueur supérieure à un seuil donné.

Le recouvrement étant total, un mot non couvert par les assemblages de plus grande intersection est par exemple remplacé par le mot source correspondant avec une indication signalant que ce mot est non traduit. Dans la troisième étape les assemblages sélectionnés sont par exemple les assemblages correspondant aux recouvrements ayant le plus grand nombre de mots.

Dans la quatrième étape les critères de cohérence sont par exemple fonction des flexions de la langue cible.

D'autres caractéristiques et avantages de l'invention apparaîtront à l'aide de la description qui suit, faite en regard des dessins annexés qui représentent :
- la figure 1, une présentation des étapes possibles pour la mise en oeuvre du procédé selon l'invention ;
- la figure 2, une illustration d'une base de données textuelle dans une langue cible ;
- la figure 3, un exemple d'enchaînement de phases successives réalisant les étapes du procédé selon l'invention ;
- la figure 4, une présentation à titre d'exemple de deux phrases en français et leurs analyses syntaxiques, le français étant langue cible d'une traduction ;
- la figure 5, une présentation d'une phrase en anglais à traduire en français, et son analyse syntaxique.

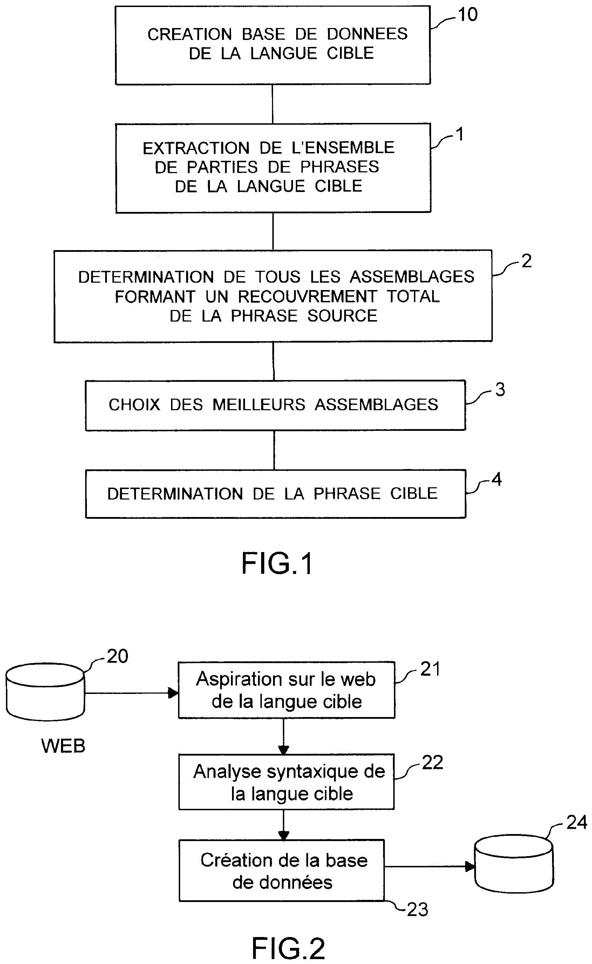

La figure 1 illustre les étapes possibles pour la mise en oeuvre d'un procédé selon l'invention. Le procédé selon l'invention combine notamment des technologies linguistiques d'analyse syntaxique profonde avec un apprentissage sur la seule langue cible concernant la manière dont doit se générer la traduction. A cet effet, le procédé s'appuie notamment sur une technologie d'indexation et de recherche textuelle interlingue appliquée à l'ensemble des phrases de la langue cible qui sont notamment accessibles en format numérique sur le réseau, le Web, éventuellement complété par des documents textuels, d'un utilisateur par exemple. Selon l'invention, la traduction pose la phrase à traduire comme une requête à ce système interlingue et détermine l'ensemble des phrases qui donnent une intersection structurelle et sémantique la plus complète possible avec un recouvrement total du sens de la phrase source à traduire. Les phrases extraites en langage cible servent à générer par composition la traduction recherchée. Les étapes décrites par la suite mettent en oeuvre ce procédé.

Dans une étape préalable 10, le procédé crée par exemple la base de données de la langue cible, en utilisant notamment un analyseur morphosyntaxique de la langue cible. Dans cette base, un document correspond par exemple à une phrase.

Par la suite, pour la traduction d'une phrase source à traduire, une première étape 1 du procédé exécute l'extraction de l'ensemble de parties de phrases de la langue cible correspondant à une traduction totale ou partielle de la phrase source à traduire.

Une deuxième étape 2 comporte la détermination de tous les assemblages de ces parties de phrases cibles formant un recouvrement total de la phrase source. Eventuellement, le recouvrement peut être presque total dans le cas où entrent en jeu notamment des noms propres ou des noms inconnus.

Une troisième étape 3 réalise le choix des meilleurs assemblages selon un critère de recouvrement maximal entre les parties de phrases cibles assemblées dans l'étape 2 et selon un critère de minimisation du nombre d'éléments assemblés. Les recouvrements sont les parties communes des graphes de dépendance, c'est-à-dire les mots et leurs relations, de chaque partie des phrases cibles. Les meilleurs recouvrements selon le critère de recouvrement maximal correspondent à ceux qui ont le plus grand nombre de mots.

Une quatrième étape 4 détermine la phrase cible par le choix du meilleur assemblage qui satisfait des critères de cohérence. Ces critères de cohérence sont notamment les temps des verbes, le genre ou le nombre, et plus généralement les informations flexionnelles. Une flexion permet une modification d'un mot à l'aide de ces informations flexionnelles. Ces dernières expriment certains aspects et rapports grammaticaux tels que les déclinaisons ou les conjugaisons par exemple.

La figure 2 illustre un exemple de création de la base de données dans une étape préalable possible 10 du procédé. Cette création comporte plusieurs phases. Dans une première phase 21 le système de traduction effectue la récupération de tous les textes dans la langue cible accessibles par Internet ou par tout autre moyen. La récupération des textes sur le réseau Internet 20, ou Web, est par exemple réalisée à l'aide d'un robot de recherche ou par achat de tranches du Web par un opérateur qui parcourt des sites entiers du Web pour récupérer leurs contenus éventuels.

Une deuxième phase 22 réalise un découpage des textes récupérés en phrases selon des méthodes connues puis réalise une analyse syntaxique séquentielle de ces phrases par exemple sous forme de relations de dépendances, formant ainsi une structure profonde donnant une représentation commune à de nombreuses formes de surfaces équivalentes du point de vue sémantique. Une structure profonde correspond en effet à une représentation syntaxique sous forme de relations de dépendance. Elle est dite profonde car elle peut représenter plusieurs formulations dites de surfaces, c'est-à-dire une succession de mots qui donnent le même sens. Une forme ou une structure de surface correspond à un agencement des mots tel qu'il est dans le texte. Il y a notamment assimilation des qualitatifs, adjectifs ou noms. Ainsi « cardiaque » est associé à « du coeur ». De même il y a assimilation des noms d'action avec les verbes, par exemple « lire » est associé à « lecture ». Les mots ou expressions idiomatiques sont normalisées, c'est-à-dire qu'au moins on les représente par leur lemme ou mieux par un représentant d'un ensemble de lemmes jugés complètement synonymes. Un lemme est une forme normalisée d'un mot comme on la trouve notamment dans un dictionnaire, correspondant notamment au singulier nominatif pour les noms, au masculin singulier nominatif pour les adjectifs et à l'infinitif pour les verbes. Un calcul du référent des pronoms est effectué, permettant de trouver le nom que le pronom remplace. Des notations d'information du type genre-nombre et temps-mode-personne sont aussi effectuées. Le lien entre structure profonde normalisée et formes de surfaces est conservé.

Dans une troisième phase 23, la base de données textuelle 24 est constituée. Chaque phrase analysée devient un document d'un système de recherche textuel. L'information directe, dans un fichier direct, comprend la phrase dans sa forme cible et l'analyse syntaxique avec les liens de dépendance.

Le fichier direct contient des informations concernant chacune des phrases indexées, c'est-à-dire le texte de la phrase et une représentation de l'analyse syntaxique de dépendance. Cela peut être une liste de triplets de mots composant l'analyse syntaxique de la phrase avec une information pour chaque triplet sur la localisation des mots dans la phrase.

L'analyse syntaxique est par exemple aussi codée dans un fichier inversé sous forme de triplets gouverneur-dépendant-relation associés à une information de localisation dans les différentes phrases où ils apparaissent. Cela permet notamment de contrôler si des triplets se combinent pour faire des structures plus complexes. Ce fichier inversé comporte aussi des mots simples pour pouvoir aussi les chercher même s'il n'est pas possible de trouver des relations avec les autres mots de la phrase. Un fichier inversé est un fichier qui associe un mot ou un triplet de mots représentant deux mots ou deux triplets, gouverneur-dépendant-relation, en relation de dépendance à la liste de ses localisations dans les documents de la base de données 24. En ce qui concerne le triplet gouverneur-dépendant-relation, dans une analyse de dépendance le gouverneur est le mot principal et le dépendant, ou gouverné, est le mot qui le qualifie. Par exemple dans la phrase « Le chat boit du lait chaud », le mot « boit » est le gouverneur du mot « chat » avec la relation agent de l'action et du mot « lait » avec la relation objet direct. Par ailleurs, le mot « lait » est le gouverneur du mot « chaud » qui est son dépendant. L'information de relation contenue dans un triplet indique notamment la nature de la relation du mot dépendant au mot gouverné, par exemple agent, complément, adverbe, etc.... La figure 2 illustre un exemple de création d'une base de données dans la langue cible. D'autres types de bases de données peuvent être utilisés. En particulier, les données peuvent être stockées dans un fichier unique ou une base unique ou être réparties en plusieurs endroits, l'important étant leur accessibilité.

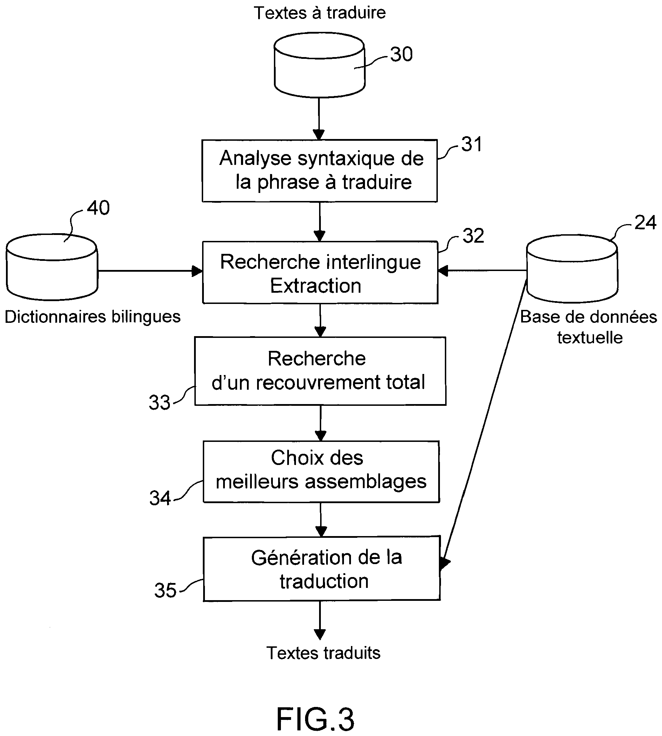

La figure 3 illustre les autres étapes du procédé selon l'invention par un exemple de successions de phases. Une phrase est extraite d'un ensemble 30 de textes à traduire. Une première phase 31, réalisant une analyse syntaxique de la phrase à traduire, et une deuxième phase 32, de recherche interlingue, forment la première étape 1 du procédé.

La première phase 31 réalise donc l'analyse syntaxique de la phrase à traduire dans la langue source. Cette analyse est par exemple réalisée par le même système d'analyse syntaxique de dépendance que pour la création de la base de données en langue cible 24, donnant une représentation de dépendance la plus profonde possible. L'analyse de la langue cible et l'analyse de la phrase à traduire en langue source se font ainsi avec un même niveau de représentation.

La deuxième phase 32 utilise un système de recherche interlingue pour trouver les meilleurs recouvrements entre le résultat de l'analyse syntaxique (31) de la phrase source dont les éléments ont été remplacés par des traductions possibles et les résultats de l'analyse syntaxique (22) des phrases cibles stockées dans la base de données (24). Pour réaliser cette recherche interlingue, un dictionnaire bilingue est utilisé. Dans une phase supplémentaire, un dictionnaire bilingue généralisé est avantageusement constitué. En effet, les dictionnaires bilingues tels qu'on les trouve par exemple dans le commerce peuvent être insuffisants pour assurer une bonne recherche interlingue, en particulier dans le cas où aucune traduction mot à mot d'une partie de la phrase n'est possible. La prise en compte de la traduction globale de mots composés ou d'expressions idiomatiques, y compris quand elles ne sont pas contiguës représente une amélioration importante. Cela revient à prendre en compte des hypermots qui peuvent être étiquetés par une seule catégorie grammaticale. Ces hypermots sont donc des sous-parties de la phrase à traduire qui sont traduites globalement. De façon générale, un hypermot correspond à des sous-parties ou sous-structures, non nécessairement contiguës, qui ne peuvent se traduire que globalement. Ainsi, les hypermots sont dépendants du couple de langues en jeu, la langue source et la langue cible. Plus les langues sont éloignées dans leur manière d'établir le rapport entre les mots et le sens, plus les structures à mettre en correspondance dans le dictionnaire bilingue peuvent être complexes. Cela concerne des mots simples, comme par exemple « maison » en français et « house » en anglais ainsi que des mots composés qui ne se traduisent pas mot à mot comme par exemple « seat belt » en anglais et « ceinture de sécurité » en français. Cela concerne aussi des expressions idiomatiques comme « avoir lieu » en français et « occur » en anglais ou, pour des langues plus éloignées, des structures plus complexes où un verbe gouvernant un complément d'objet direct est représenté dans l'autre langue par un seul verbe.

Dans la recherche interlingue, on utilise les traductions partielles contenues dans le dictionnaire bilingue 40 en établissant les plus grandes intersections de structure entre l'analyse de la phrase source 31 dont les éléments ont été remplacés par des traductions possibles et les analyses des phrases cibles stockées dans la base de données textuelle 24. Le recouvrement entre structures ne concerne que les mots pleins, à l'exception des mots dits vides comme les articles ou les prépositions par exemple. Les mots vides sont rattachés sans contrôle à leur gouverneur. A cet effet, il est par exemple possible de faire une recherche triplet par triplet (gouverneur, dépendant, relation). On rattache les triplets qui s'enchaînent pour trouver l'intersection maximale. Ce processus a notamment l'avantage de permettre le choix des bonnes traductions des mots ambigus qui sont aussi les mots les plus courants et donc pour lesquels on dispose dans la base de données du maximum de contextes. En ce qui concerne les mots les plus spécifiques, ils ont en général une seule traduction.

Le résultat de la recherche interlingue peut-être une liste de parties de phrases regroupées par mêmes intersections structurelles et ordonnées par tailles d'intersections structurelles décroissantes par exemple. Les parties de phrases extraites dans l'étape 1 d'extraction sont par exemple les parties de phrases de la liste dont la longueur d'intersection dépasse un seuil donné. Dans une phase suivante 33 on complète la deuxième étape 2 du procédé par la recherche d'un recouvrement total de la structure de la phrase source à partir des plus grandes intersections définies dans la phase précédente. On cherche ainsi parmi les plus grandes intersections à constituer un recouvrement total de la structure source. Si ce n'est pas possible, on fait une recherche plus large dans la liste des réponses de la recherche interlingue. Dans le cas où il reste un mot non traduit, il est remplacé par le mot source correspondant avec une indication permettant de signaler à un utilisateur que ce mot n'a pas été traduit.

La phase suivante 34 met en oeuvre l'étape 3 de choix des meilleurs assemblages.

Le choix des meilleurs assemblages étant déterminé par un critère de recouvrement maximal entre les parties de phrases cibles assemblées et par un critère de minimisation du nombre d'éléments assemblés, on sélectionne par exemple à cet effet les assemblages de mots de surfaces qui correspondent aux recouvrements ayant le plus grand nombre de mots.

A la suite des phases 31, 32, 33, 34 précédentes, chaque morceau de structure de dépendance trouvée dans les phrases cibles de la base de données 24, comme correspondant à une sous-structure de la langue source, a une relation avec les structures de surface correspondantes. On dispose alors d'assemblages de mots de surfaces, formant des structures de surface, et de leur ordre d'écriture pour constituer la traduction.

La dernière phase 35 met en oeuvre l'étape 4 lors de laquelle la phrase cible retenue parmi ces meilleurs assemblages est celle qui satisfait à des critères de cohérence. Ces critères de cohérence sont notamment les déclinaisons ou les terminaisons de conjugaison, les temps et les modes de conjugaison ainsi que les dénombrements, en particulier les marques du singulier ou du pluriel. Eventuellement, plusieurs phrases peuvent être retenues pour la traduction d'une phrase source.

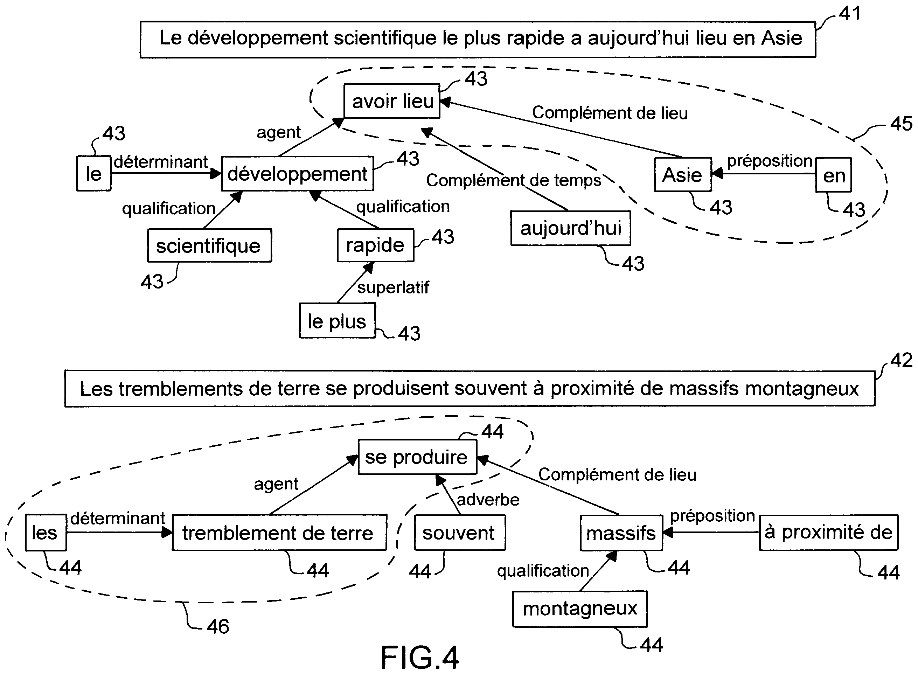

Les figures qui suivent illustrent un exemple de traduction selon l'invention selon les étapes et les phases précédemment décrites. La figure 4 présente deux phrases 41, 42 extraites par exemple du Web en français qui dans cet exemple est la langue cible. La première phrase 41 est « Le développement scientifique le plus rapide a aujourd'hui lieu en Asie » et la deuxième phrase 42 est « Les tremblements de terre se produisent souvent à proximité de massifs montagneux ». La figure 4 illustre aussi l'analyse syntaxique de ces phrases. Chaque analyse est codée par des triplets (gouverneur, dépendant, relation). Les relations sont illustrées par des flèches reliant les mots 42 dépendants aux mots 42 gouverneurs, la nature de la relation est aussi indiquée. Ainsi le mot « scientifique» est le dépendant du mot « développement » qui est son gouverneur, la relation étant une relation de qualification. L'analyse utilise des mots mais aussi des hypermots comme « avoir lieu » par exemple. Le mot « Asie » est ainsi le dépendant de l'hypermot « avoir lieu » selon une relation de dépendance qui indique un complément de lieu. Pour ces deux exemples, la base de données 24 stocke ainsi les triplets :
- (développement, scientifique, qualification) ;
- (avoir lieu, Asie, complément de lieu).

La donnée du triplet relative à la relation indique la nature de cette dernière, qualification et complément de lieu pour ces deux exemples.

Pour cette première phrase 41, ces deux triplets sont complétés par la liste de triplets suivante :
- (développement, le, déterminant) ;
- (avoir lieu, développement, agent) ;
- (développement, rapide, qualification) ;
- (rapide, le plus, superlatif) ;
- (avoir lieu, aujourd'hui, complément de temps) ;
- (Asie, en, préposition).

Pour la deuxième phrase 42, la liste de triplets est la suivante :
- (se produire, souvent, adverbe) ;
- (se produire, tremblement de terre, agent) ;
- (massif, montagneux, qualification) ;
- (tremblement de terre, les, déterminant) ;
- (se produire, massif, complément de lieu) ;
- (massif, à proximité de, préposition)

Ces deux phrases en français 41, 42, prises à titre d'exemple, peuvent être stockées dans une base de données textuelle 24 avec leurs analyses syntaxiques représentées par les triplets ci-dessus.

La description qui suit va montrer un exemple de mise en oeuvre du procédé utilisant le mécanisme de comparaison servant à déterminer les éléments à assembler pour obtenir la traduction d'une phrase.

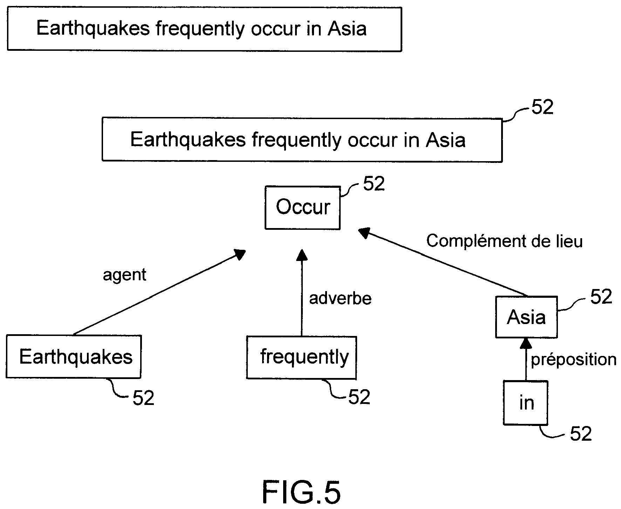

La figure 5 présente à titre d'exemple une phrase 51 à traduire de l'anglais, langue source, vers le français, langue cible. La phrase 51 est « Earthquakes frequently occur in Asia ». L'analyse syntaxique opérée dans la phase 31 de la première étape 1 est illustrée en figure 5. Les mots 52, gouverneurs ou dépendants, sont en relation de dépendance, les relations de dépendance étant illustrées par des flèches allant d'un mot dépendant vers le mot gouverneur. Ainsi, l'analyse syntaxique peut être codée par la liste de triplets suivants :
- (occur, earthquake, agent) ;
- (occur, frequently, adverbe) ;
- (occur, Asia, complément de lieu) ;
- (Asia, in, préposition).

Une fois l'analyse effectuée, la recherche interlingue est appliquée. Le système de recherche interlingue fait par exemple appel à son dictionnaire bilingue 40 pour traduire les mots dans la langue cible, ainsi que les expressions qui ne se traduisent pas mot à mot. Ainsi :
- Earthquake est traduit par tremblement de terre ;
- Occur est traduit par arriver, intervenir, s'opérer, se dérouler, se produire, se présenter, se rencontrer, se trouver, survenir, avoir lieu ;
- Frequently est traduit par souvent, fréquemment.

Le système recherche les mots anglais par leurs traductions en français en recherchant tous les couples possibles. Les couples étant définis par les relations de dépendances établies par l'analyse syntaxique précédentes. Des exemples de couples sont donnés ci-dessous, la nature de la relation entre les mots étant indiquée entre parenthèse :
- tremblement de terre (agent), arrive ;
- tremblement de terre (agent), intervient ;
- tremblement de terre (agent), se produit ;
- tremblement de terre (agent), a lieu ;
- se produit (adverbe), fréquemment ;
- se produit (adverbe), souvent ;
- a lieu (adverbe), souvent.

Seuls certains couples sont validés. Plus particulièrement, un recouvrement maximal est validé en reliant les couples. Une première partie de phrase 45 de la langue cible est « a lieu en Asie ». Une deuxième partie de phrase 46 est « les tremblements de terre se produisent ».

Des assemblages de parties de phrase formant un recouvrement total de la phrase source sont ensuite réalisés. Dans cet exemple les parties 45 et 46 peuvent être assemblées pour recouvrir la phrase source. « se produire » et « avoir lieu » étant jugés synonymes par exemple par un dictionnaire de reformulation monolingue en langue cible, ces parties peuvent être jointes pour former un recouvrement total. Un autre problème à surmonter est la différence sur le nombre, le verbe conjugué de la première partie 45 étant au singulier et le verbe conjugué de la seconde partie 46 étant au pluriel. La transformation est simple à l'aide d'une flexion en français. Ainsi la deuxième partie 46 donne le bon accord. En final, un exemple de traduction de la phrase source 51 est « les tremblements de terre se produisent souvent en Asie ».

## Revendications

1. Procédé de traduction automatique permettant de traduire une phrase dans une langue source, phrase source, en une phrase dans une langue cible, phrase cible, **caractérisé en ce qu'**il comporte :
- une étape (10) de création d'une base de données textuelle (24) de la langue cible comprenant des phrases en langue cible, phrases cibles, accompagnées d'une représentation de leur analyse syntaxique ;
- une étape (1) d'extraction de la base de données textuelle (24) de la langue cible, d'un ensemble de parties de phrases cibles correspondant à une traduction totale ou partielle de la phrase source à traduire, l'étape d'extraction comprenant une phase d'analyse syntaxique (31) de la phrase source à traduire, et une phase de recherche textuelle interlingue (32) entre la phrase source à traduire et les phrases cibles pour trouver les plus grandes intersections de structures entre le résultat de l'analyse syntaxique (31) de la phrase source dont les éléments ont été remplacés par des traductions possibles, et les représentations de l'analyse syntaxique des phrases cibles stockées dans la base de données (24) ;
- une étape (2) de détermination de tous les assemblages de ces parties de phrases cibles formant un recouvrement de la phrase source ;
- une étape (3) de choix des meilleurs assemblages entre les parties de phrases cibles assemblées dans l'étape précédente selon un critère de recouvrement maximal et selon un critère de minimisation du nombre d'éléments assemblés ;
- une étape (4) de détermination de la phrase cible comme traduction de la phrase source, parmi les meilleurs assemblages en fonction de critères de cohérence.

2. Procédé selon la revendication 1, **caractérisé en ce que** l'étape de création de la base de données textuelle (24) de la langue cible est faite selon les phases suivantes :
- une première phase (21) effectuant une récupération de textes accessibles dans la langue cible ;
- une deuxième phase (22) réalisant un découpage en phrases des textes récupérés et réalisant une analyse syntaxique des phrases ;
- une troisième phase (23) regroupant les textes des phrases accompagnés d'une représentation de leur analyse syntaxique.

3. Procédé selon la revendication 2, **caractérisé en ce que** l'analyse syntaxique (22) est réalisée sous forme de relations de dépendance, le résultat de l'analyse étant codé par des triplets (gouverneur, dépendant, relation) associés à une information de localisation dans les différentes phrases de la base de données textuelles (24) de la langue cible où ils apparaissent, le gouverneur étant un mot principal et son dépendant étant un mot qui le qualifie en fonction de la relation.

4. Procédé selon l'une quelconque des revendications précédentes, **caractérisé en ce que** dans la première étape (1) les plus grandes intersections de structure sont les parties de phrases dont la longueur d'intersection de structure dépasse un seuil donné.

5. Procédé selon l'une quelconque des revendications, **caractérisé en ce que** la deuxième étape (2) comporte une phase (33) de détermination des assemblages formant un recouvrement total de la phrase source à partir des assemblages de plus grande intersection.

6. Procédé selon la revendication 5, **caractérisé en ce que** le recouvrement étant total, un mot non couvert par les assemblages de plus grande intersection est remplacé par le mot source correspondant avec une indication signalant que ce mot est non traduit.

7. Procédé selon l'une quelconque des revendications précédentes, **caractérisé en ce que** dans la troisième étape (3) les assemblages sélectionnés selon le critère de recouvrement maximal sont ceux qui correspondent aux recouvrements ayant le plus grand nombre de mots.

8. Procédé selon l'une quelconque des revendications précédentes, **caractérisé en ce que** dans la quatrième étape (4) les critères de cohérence sont fonction des flexions de la langue cible.

## Patentansprüche

1. Automatisches Übersetzungsverfahren, mit dem ein Satz in einer Ausgangssprache, Ausgangssatz genannt, in einen Satz in einer Zielsprache, Zielsatz genannt, übersetzt werden kann, **dadurch gekennzeichnet, dass** es Folgendes beinhaltet:
- einen Schritt (10) des Erzeugens einer Textdatenbank (24) der Zielsprache, umfassend Sätze in der Zielsprache, Zielsätze genannt, begleitet von einer Darstellung ihrer Syntaxanalyse;
- einen Schritt (1) des Extrahierens einer Menge an Zielsatzteilen aus der Textdatenbank (24) der Zielsprache, entsprechend einer gesamten oder teilweisen Übersetzung des zu übersetzenden Ausgangssatzes, wobei der Extraktionsschritt eine Syntaxanalysephase (31) des zu übersetzenden Ausgangssatzes umfasst, und eine interlinguale textuelle Suchphase (32) zwischen dem zu übersetzenden Ausgangssatz und den Zielsätzen, um die größten Schnittpunkte von Strukturen zwischen dem Ergebnis der Syntaxanalyse (31) des Ausgangssatzes zu finden, deren Elemente durch mögliche Übersetzungen ersetzt wurden, und die Darstellungen der Syntaxanalyse der in der Datenbank (24) gespeicherten Zielsätze;
- einen Schritt (2) des Bestimmens aller Zusammenfügungen dieser Zielsatzteile, die eine Abdeckung des Zielsatzes bilden;
- einen Schritt (3) des Auswählens der besten Zusammenfügungen zwischen den im vorherigen Schritt zusammengefügten Zielsatzteilen gemäß einem maximalen Abdeckungskriterium und gemäß einem Kriterium des Minimierens der Anzahl der zusammengefügten Elemente;
- einen Schritt (4) des Bestimmens des Zielsatzes als eine Übersetzung des Ausgangssatzes unter den besten Zusammenfügungen in Abhängigkeit von Kohärenzkriterien.

2. Verfahren nach Anspruch 1, **dadurch gekennzeichnet, dass** der Schritt des Erzeugens der Textdatenbank (24) der Zielsprache gemäß den folgenden Phasen erfolgt:
- eine erste Phase (21), die einen Abruf von in der Zielsprache zugänglichen Texten bewirkt;
- eine zweite Phase (22), die eine Zerlegung der abgerufenenen Texte in Sätze realisiert und eine Syntaxanalyse der Sätze realisiert;
- eine dritte Phase (23) des Umgruppierens der Texte von Sätzen, begleitet von einer Darstellung ihrer Syntaxanalyse.

3. Verfahren nach Anspruch 2, **dadurch gekennzeichnet, dass** die Syntaxanalyse (22) in Form von Abhängigkeitsbeziehungen realisiert wird, wobei das Ergebnis der Analyse durch die Tripletts (Bestimmungsglied, Abhängigkeitsglied, Beziehung) codiert wird, assoziiert mit einer Lokalisierungsinformation in den verschiedenen Sätzen der Textdatenbank (24) der Zielsprache, in der sie erscheinen, wobei das Bestimmungsglied ein Hauptwort ist und sein Abhängigkeitsglied ein Wort ist, das es in Abhängigkeit von der Beziehung qualifiziert.

4. Verfahren nach einem der vorherigen Ansprüche, **dadurch gekennzeichnet, dass** im ersten Schritt (1) die größten Strukturschnittpunkte Satzteile sind, deren Strukturschnittpunktlänge eine gegebene Schwelle übersteigt.

5. Verfahren nach einem der vorherigen Ansprüche, **dadurch gekennzeichnet, dass** der zweite Schritt (2) eine Phase (33) des Bestimmens von Zusammenfügungen beinhaltet, die eine totale Abdeckung des Ausgangssatzes bilden, auf der Basis der Zusammenfügungen des größten Querschnitts.

6. Verfahren nach Anspruch 5, **dadurch gekennzeichnet, dass**, da die Abdeckung total ist, ein nicht durch die Zusammenfügungen der größten Schnittpunkte abgedecktes Wort durch das entsprechende Ausgangswort mit einer Anzeige ersetzt wird, die signalisiert, dass dieses Wort nicht übersetzt ist.

7. Verfahren nach einem der vorherigen Ansprüche, **dadurch gekennzeichnet, dass** im dritten Schritt (3) die gemäß dem maximalen Abdeckungskriterium gewählten Zusammenfügungen diejenigen sind, die den Abdeckungen mit der größten Anzahl von Wörtern entsprechen.

8. Verfahren nach einem der vorherigen Ansprüche, **dadurch gekennzeichnet, dass** im vierten Schritt (4) die Kohärenzkriterien von den Flexionen der Zielsprache abhängig sind.

## Claims

1. An automatic translation method to translate a sentence in a source language, called source sentence, into a sentence in a target language, called target sentence, **characterized in that** it comprises:
- a step (10) of creating a textual database (24) of the target language comprising sentences in the target language, called target sentences, accompanied by a representation of their syntactic analysis;
- a step (1) of extracting a set of target sentence portions from the textual database (24) of the target language that correspond to a total or partial translation of the source sentence to be translated, the step of extracting comprising a phase of syntactic analysis (31) of the source sentence to be translated, and an interlingual textual search phase (32) between the source sentence to be translated and the target language so as to find the greatest structural intersections between the result of the syntactic analysis (31) of the source sentence whose elements have been replaced by possible translations, and the representations of the syntactic analysis of the target sentences stored in the database (24);
- a step (2) of determining all the assemblies of these target sentence portions forming an overlap with the source sentence;
- a step (3) of choosing the best assemblies between the target sentence portions assembled in the preceding step according to a criterion of maximum overlap and according to a criterion of minimizing the number of assembled elements;
- a step (4) of determining the target sentence as a translation of the source sentence, among the best assemblies according to coherence criteria.

2. The method as claimed in claim 1, **characterized in that** the step of creating the database (24) of the target language is made according to the following phases:
- a first phase (21) for recovering texts available in the target language;
- a second phase (22) for breaking down the recovered texts into sentences and performing a syntactic analysis of the sentences;
- a third phase (23) for regrouping the texts of the sentences accompanied by a representation of their syntactic analysis.

3. The method as claimed in claim 2, **characterized in that** the syntactic analysis (22) is carried out in the form of dependency relationships, the result of the analysis being coded by triplets (governor, dependent, relationship) associated with location information in the various sentences of the textual database (24) of the target language in which they appear, the governor being a main word and its dependent being a word that qualifies it according to the relationship.

4. The method as claimed in anyone of the preceding claims, **characterized in that**, in the first step (1) the greatest structural intersections are the sentence portions the structural intersection length of which is greater than a given threshold.

5. The method as claimed in anyone of the preceding claims, **characterized in that** the second step (2) includes a phase (33) of determining the assemblies that form a total overlap of the source sentence from the assemblies with greatest intersection.

6. The method as claimed in claim 5, **characterized in that** the overlap being total, a word not covered by the assemblies of greatest intersection is replaced by the corresponding source word with an indication signaling that this word is not translated.

7. The method as claimed in any one of the preceding claims, **characterized in that**, in the third step (3), the assemblies selected according to the maximum overlap criterion are those that correspond to the overlaps that have the greatest number of words.

8. The method as claimed in any one of the preceding claims, **characterized in that**, in the fourth step (4), the coherence criteria are a function of the inflections of the target language.
